## Europäisches Patentamt

## European Patent Office

## Office européen des brevets

(11) Publication number: **0 112 101**
**B1**

(12) **EUROPEAN PATENT SPECIFICATION**

(45) Date of publication of patent specification: **12.11.86**

(21) Application number: **83307346.3**

(22) Date of filing: **02.12.83**

(51) Int. Cl.⁴: **B 01 D 53/34, B 05 B 5/04**

(54) Improvements in or relating to liquid spraying.

(30) Priority: **10.12.82 GB 8235331**
**17.11.83 GB 8330664**

(43) Date of publication of application:
**27.06.84 Bulletin 84/26**

(45) Publication of the grant of the patent:
**12.11.86 Bulletin 86/46**

(84) Designated Contracting States:
**AT BE CH DE FR IT LI LU NL SE**

(56) References cited:
**FR-A-2 152 815**
**FR-A-2 170 940**
**GB-A-2 084 896**

(73) Proprietor: **DRESSER INDUSTRIES, INC.**
**The Dresser Building Elm At Akard P.O. Box 718**
**Dallas Texas 75021 (US)**

(72) Inventor: **Ashley, Michael John**
**12 Bullivents Close Solihull**
**West Midlands (GB)**
Inventor: **Greaves, Roy Anthony**
**15 Ashleigh Drive**
**Belgrave Tamworth Staffordshire (GB)**
Inventor: **Guest, Graham John**
**48 Green Lane Tettenhall**
**Wolverhampton West Midlands (GB)**
Inventor: **Hemphill, Paul Douglas**
**524 Hillhurst Drive**
**Baytown Texas 77521 (US)**
Inventor: **Leivo, Charles Clinton**
**11 Cape Chestnut**
**The Woodlands Texas 77381 (US)**
Inventor: **Pekar, Warren Daniel**
**7506 Pine Oak Drive**
**Humble Texas 77338 (US)**

(74) Representative: **Holdcroft, James Gerald, Dr.**
**et al**
**Graham Watt & Co. Riverhead**
**Sevenoaks Kent TN13 2BN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is concerned with improvements in or relating to liquid spraying particularly but not exclusively the spraying of an abrasive liquid/solid slurry.

In for example GB—A—2,084,896 (equivalent EP—A—0 049 585) there is described a spray device for liquids comprising a high speed rotating cup the interior of which provides an extended surface from which the liquid is directed; immediately beyond the surface the liquid is impacted with a gas stream thereby to produce a spray of liquid droplets.

One of the technical applications described in GB—A—2,084,896 for this spray device is the treatment of a polluted gas e.g. containing sulphur dioxide, by the spraying into the gas of an abrasive liquid/solid slurry e.g. an aqueous lime slurry, under spray drying conditions.

One problem which sometimes arises with the spraying of a slurry using a high speed rotating cup spray device is the uncontrolled build-up of solids on the spray device, which for example may upset its dynamic balance and can result in serious mechanical failure; build-up of solids can also result in blockage of liquid supply ducts.

It is believed that the build-up of solids can result for example from the back-circulation of the sulphur dioxide containing gas, which then reacts with the lime slurry to form a solid reaction product.

Also described in GB—A—2,084,896 is the use of an aqueous sodium carbonate solution in replacement of the aqueous lime slurry; other technical applications described therein are conditioning of a gas with water prior to passage through an electro-precipitator, and the evaporative cooling with water of a hot polluted gas; in all these cases build-up of solids can arise, e.g. if the liquid being sprayed contains solid particulate impurities; or the risk of build-up of solids may arise from the nature of the polluted gas e.g. in the case of the evaporative cooling of polluted gas from a cement plant.

It is an object of the present invention to provide an improved spray device.

The invention provides a spray device adapted for use in spraying a liquid which in the operation of the device is directed from an extended surface thereof, the spray device comprising (a) an axially symmetrical cup rotatable about its axis and the interior of which provides the extended surface, and which converges generally frusto-conically from the rim; (b) means for supplying the liquid to the interior of the cup so that a film of liquid is continuously provided on the extended surface preparatory to directing the liquid from the surface beyond an outer rim of the cup; (c) means for supplying a gas stream to impact the liquid immediately beyond the outer rim thereby to produce a spray of liquid droplets; and (d) an axially symmetrical baffle mounted within the cup coaxially therewith, an annular gap being provided between the baffle and the extended surface, characterised in that the ratio of the diameter (D) of the cup at its outer rim to the axial height (h) of the frusto-conical surface is (D:h) from 3:1 to 6:1.

The extended surface converges generally frusto-conically from the outer rim of the cup, and the included frusto-conical angle may be from 20° to 160°, for example from 60° to 120° e.g. from 80° to 100° or 120°.

The baffle is for example inverted frusto-conical converging generally frusto-conically in the axial direction away from the outer rim of the cup with its included frusto-conical angle not exceeding 140°, e.g. not exceeding 120°.

Also the baffle is for example set back axially inwardly of the outer rim of the cup, and the ratio between the diameter (D) and the axial distance (d) from the outer rim to the baffle (D:d) does not exceed 8:1 e.g. from 7:1 to 8:1.

The inverted frusto-conical baffle has a major diameter for example at least 70% e.g. at least 75% of the diameter of the interior surface of the cup at the plane of said outer diameter.

When the spray device has a capacity up to about 68 litres (15 Imperial gallons) per minute (e.g. a capacity in the range from 9 to 68 litres (2 to 15 Imperial gallons) per minute);

(i) the diameter of the cup at its outer rim does not exceed about 120 mm and preferably does not exceed about 110 mm.; and

(ii) the overall height of the cup does not exceed about 125 mm., and preferably does not exceed about 90 mm.

When the spray device has a higher capacity e.g. up to 136 or 227 litres (30 or 50 Imperial gallons) per minute then the numerical upper limits (i) and (ii) are likely to be increased.

The baffle instead of being inverted frusto-conical may be for example a thin circular flat plate; in which case its diameter is for example at least 50% e.g. at least 60% of the diameter of the interior surface of the cup in the plane of the bottom surface of the plate.

A spray device embodying the invention finds particular, but not exclusive technical application in an apparatus and method for desulphurising a sulphur dioxide-containing gas by spray drying using an aqueous lime slurry, as described in GB—A—2,084,896. The spray device embodying the invention may also be employed in the other technical applications described in GB—A—2,084,896; a further possible technical application is in the treatment of a polluted gas from an incinerator plant where for example a sodium carbonate solution is used to remove *inter alia* hydrogen chloride from the gas. It will be realized that in all these technical applications the spray device embodying the invention facilitates the use of the spraying liquids without taking any special measures to free the liquids of solid particulate impurities.

It is believed that a spray device embodying the invention provides for minimum liquid or slurry contact time and thin film formation on the extended surface of the cup, to reduce the tendency for build-up of solids either through chemical or mechanical action.

The invention also provides a gas/liquid contacting apparatus comprising a spray drier chamber having a gas inlet and a gas outlet and a spray device according to the invention arranged to spray the liquid into the chamber for contacting with the gas.

The invention also provides apparatus adapted for use in desulphurising a hot sulphur dioxide-containing gas comprising (a) a spray drier vessel which comprises an inlet communicating with a source of the hot sulphur dioxide containing gas and an outlet for the gas; (b) a spray device according to the invention arranged to spray the liquid into the vessel, the liquid supply means of said device communicating with a source of an aqueous solution or slurry which absorbs sulphur dioxide with chemical reaction; and (c) means (e.g. an electro-precipitator or a bag filter) communicating with the vessel outlet for removing suspended particles from the gas which has been contacted with liquid in the vessel.

The invention also provides a method of treating a polluted gas with a liquid to cool and/or clean the gas, wherein the liquid is sprayed into the polluted gas using a spray device according to the invention.

There now follows a description, to be read with reference to the accompanying drawings of apparatus embodying the invention. This description, which is illustrative of method, product and apparatus aspects of the invention, is given by way of example only, and not by way of limitation of the invention.

In the accompanying drawings:

Figure 1 shows a flow diagram of apparatus adapted for use in desulphurising flue gas;

Figure 2 shows a part-sectional view of a rotary cup atomiser;

Figure 3 shows a sectional view of parts of a first modified rotary cup atomiser;

Figure 3A shows a modification of part of Figure 3;

Figure 4 shows a sectional plan view of parts of the first modified atomiser;

Figure 5 shows a modified version of Figure 4;

Figure 6 shows a part-sectional view of parts of a second modified rotary cup atomiser;

Figure 7 illustrates dimensional parameters; and

Figure 8 shows a modified distributor arrangement for use in the atomiser of Figure 3.

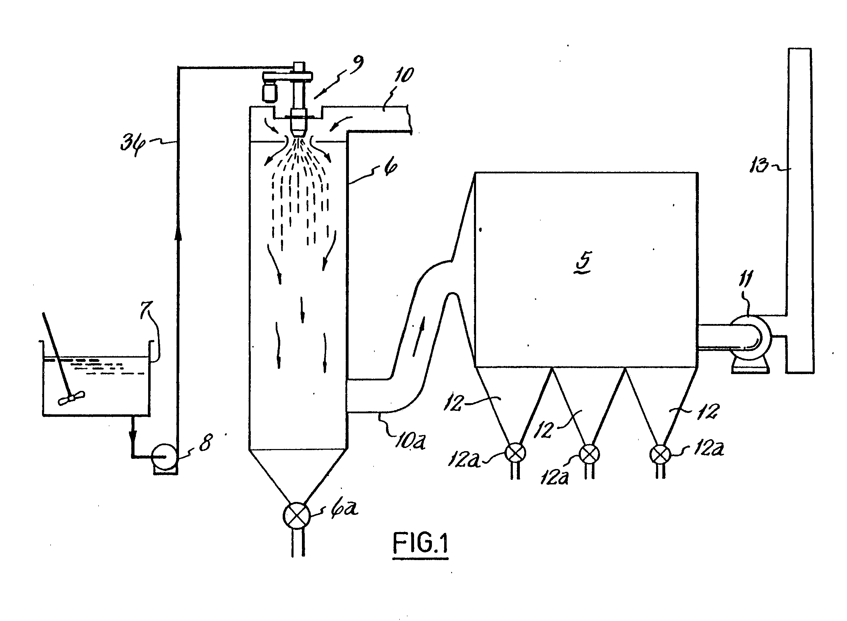

Apparatus adapted for use in desulphurising flue gas from a coal-fired installation is illustrated schematically in Figure 1. A unit shown at 5 for treating the flue gas after a tall thin desulphurising tower 6, comprises a bag filter or an electro-precipitator. Aqueous slurries of slaked lime or limestone are prepared in a vessel 7 and pumped by a pump 8 *via* a line 36 to a rotating-cup atomiser 9 at the top of tower 6. Hot gas, for example boiler flue gas at a temperature between 120°C and 200°C containing sulphur dioxide (e.g. 300—3,000 p.p.m. $SO_2$ by volume) is directed to the top of the tower 6 *via* inlet line 10. Spray drying occurs in the tower 6 upon contact of the hot gas and the atomised slurry, and dry powder effluent is collected at the bottom of tower 6 and removed *via* a valve 6a. The flue gas then passes *via* outlet line 10a through bag filter or electro-precipitator 5 and further powder effluent and fly ash (including some spent absorbent) is collected in hoppers 12 and removed *via* valves 12a. The substantially desulphurised flue gas is then exhausted by a fan 11 to the atmosphere *via* a stack 13.

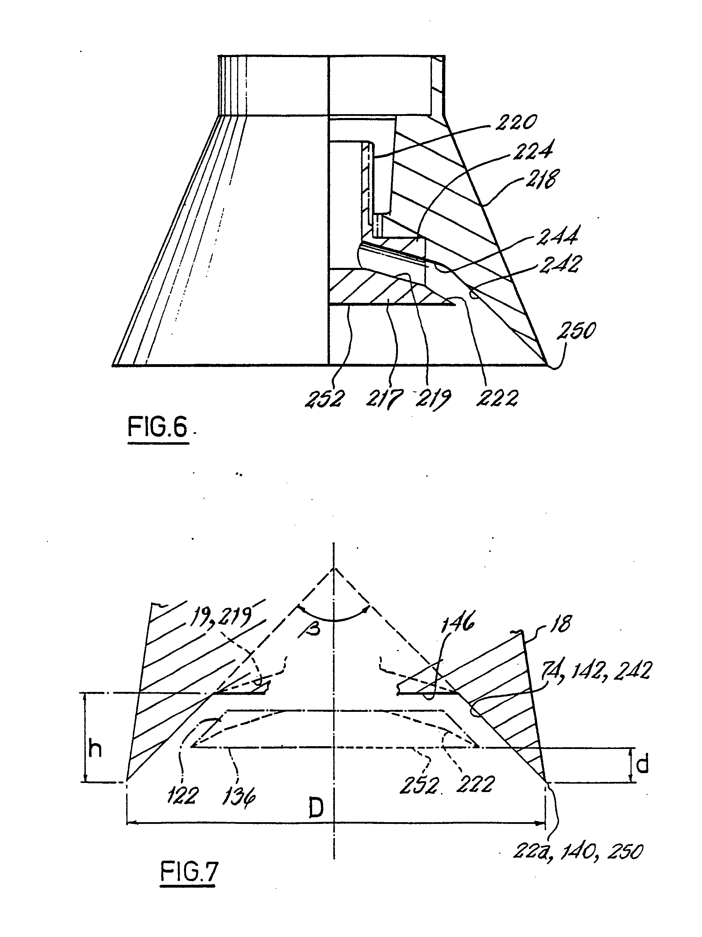

The tower 6 and its operation are generally similar to the tower described in GB—A—2,084,896 with reference to Figures 6, 7 and 8 thereof. Typically a single tower 6 handles up to 14,000 cubic metres (500,000 cubic feet) (ambient conditions) per minute of flue gas, and a 500 Megawatt coal burning power station would require 4 or 5 such towers to handle its entire flue gas effluent.

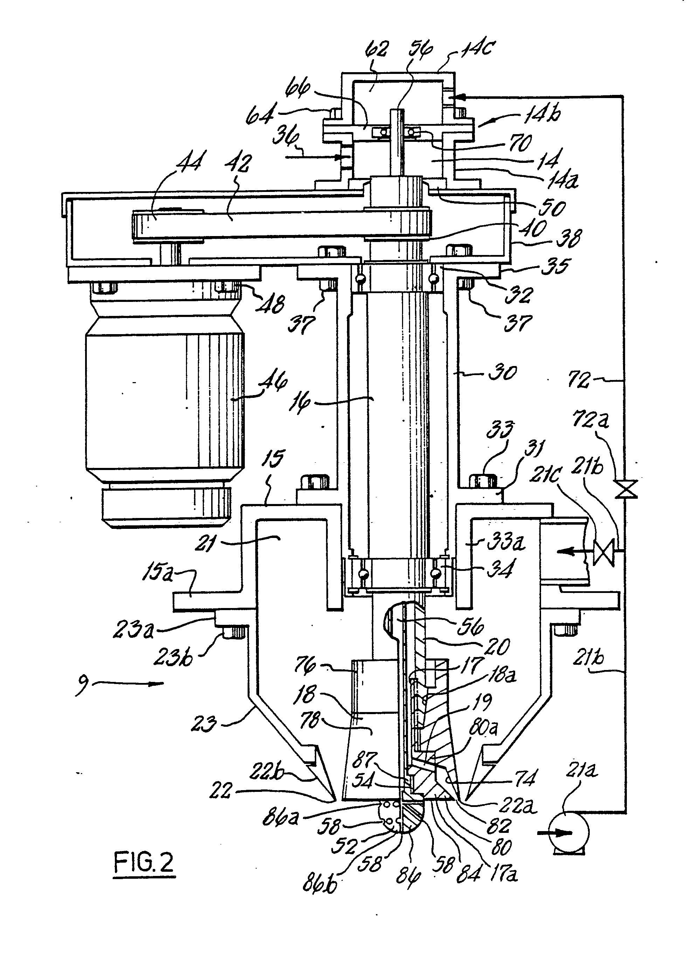

The rotating cup atomiser 9 is shown in more detail in Figure 2. In the atomiser 9 a liquid supply path comprises a chamber 14 defined in a lower portion 14a of a housing 14b, a hollow vertical rotatable shaft 16 leading from the chamber 14, a vertical duct 17 at the top of an axially symmetrical distributor member 17a which is screwed into a lower end portion 20 of the shaft 16, and six downwardly inclined ducts 19 provided in the distributor member 17a axially symmetrically thereof and leading from the vertical duct 17. The slurry line 36 leads into the chamber 14.

It will be noted that the liquid supply path from the chamber 14 downwardly is symmetrical about the axis of the shaft 16.

A massive axially symmetrical rotatable cup 18 of integral construction is secured to the lower end portion 20 of the shaft 16, which is externally downwardly tapered at that region to fit tightly into a corresponding tapered recess 18a in the cup 18; it will be realized that the cup 18 is held on the shaft 16 by the distributor member 17a. The cup 18 and the distributor member 17a within the cup 18 are coaxial and rotate with the shaft about its axis in the operation of the atomiser.

Air is supplied to the atomiser 9 through an annular chamber 21 external to the cup 18 by, for example, a blower 21a connected to the chamber 21 *via* a line 21b which includes a control valve 21c. The air exits the chamber 21 at high velocity (at least 280 feet/second) *via* an annular nozzle aperture 22 defined around a lower, outer, rim 22a of the cup 18 and between the cup 18 and a stationary cup shroud 23 which surrounds the cup 18 and defines an outer wall of the chamber 21. The shroud 23 comprises a lower ring portion 22b the interior of which converges downwardly to define the outer boundary of the nozzle aperture 22.

The shroud 23 is bolted at 23b to a housing element 15 *via* respective flanges 23a, and 15a;

the flange 15a is used in mounting the atomiser 9 in the tower 6. The shaft 16 extends upwardly through a housing element 30 where it is mounted in axially spaced ball bearings 32, 34. The housing element 30 is bolted at 33 to the housing element 15 via a flange 31, and extends downwardly from the flange 31 into a re-entrant portion 33a of the housing element 15.

An upper end portion of the shaft 16 extends into a belt housing 38 which is bolted at 37 to the housing element 30 via a flange 35. A belt pulley 40 is mounted on the shaft 16 within the housing 38 and a drive belt 42 is tensioned within the housing 38 around the pulley 40 and a drive pulley 44 of an electric motor 46. The electric motor 46 is bolted to the housing 38 at 48. The housing 14b is mounted on the belt housing 38 and the upper end portion of the shaft 16 extends through an upper wall of the belt housing 38 through a liquid seal 50 into the chamber 14.

The rotary cup atomiser also comprises an air purge arrangement to minimise the risk of solids build-up on the distributor member 17a and which comprises a purge head 52 screwed into an axial recess 54 in the distributor member 17a. The purge head 52 is mounted on a vertical tube 56 which is received in the shaft 16 coaxially therewith. The interior of the tube 56 communicates with a plurality of purge passages 58 in the head 52. The tube 56 extends through the chamber 14 into a chamber 62 in an upper portion 14c of the housing 14b. The upper and lower portions 14a, 14c of the housing 14b are secured together by screws 64 and separated by a horizontal plate 66 in which an upper end portion of the tube 56 is mounted in a sealed ball bearing 70 for rotation with the shaft 16. Air is supplied to the purge head 52 from the chamber 62 via the tube 56, and the air is supplied to the chamber 62 by the blower 21a via a line 72 branching off the line 21b and including a control valve 72a.

In operation the cup 18 is rotated by the electric motor 46 at a speed of e.g. from 3,000 to 6,000 r.p.m., and the aqueous slurry of e.g. calcium hydroxide is continuously supplied to the interior of the rotating cup 18 via the supply path including the ducts 19 and is continuously distributed around an extended interior surface 74 of the cup 18 as a uniform thin film. As centrifugal force drives the suspension beyond the rim 22a of the cup it is atomised by impaction immediately beyond the rim 22a with the high velocity stream of air exiting through aperture 22. This causes instability in the liquid film and results in the production of a spray of fine droplets, which is sprayed into a sulphur dioxide-containing flue gas whereby to absorb sulphur dioxide from the gas with chemical reaction. The ambient conditions of the flue gas are such that spray drying conditions are maintained in the tower 6; and all the water is evaporated and the absorption product is dried as it is formed.

Further details of the cup 18, the distributor member 17a and the purge head 52 will now be described.

The massive integral cup 18 comprises (in external profile) a circular cylindrical upstream end portion 76 and a frusto-conical downstream end portion 78 which converges upwardly from the rim 22a. The rim 22a is sharply pointed and the interior surface 74 is again frusto-conical. The included frusto-conical angle β (Figure 7) of the surface 74 is about 90°; the overall height of the cup 18 from the rim 22a to the top of the cylindrical portion 76 is about 75 mm; the diameter (D) of the cup 18 at the rim 22a is also about 75 mm. The ratio of the diameter (D) to the axial height (h) of the surface 74 is within the range from 3:1 to 6:1.

A lower portion 80 of the distributor member 17a forms a frusto-conical baffle portion within the cup 18 coaxially therewith, leaving an annular gap 82 between the outer rim of the baffle portion 80 and the interior of the cup 18; the ducts 19 are provided in a circular cylindrical portion 80a, of the distributor member 17a extending upwardly from the baffle portion 80. A lower horizontal surface 84 of the baffle portion 80 lies in the plane of the rim 22a of the cup 18. The diameter of the surface 84 (i.e. the major diameter of the frusto-conical baffle portion 80) is about 93% of the diameter of the rim 22a; and the annular gap 82 is at least sufficiently wide so as to avoid the possibility of obstruction by solid particles in the slurry which have passed through the ducts 19. The included conical angle of the baffle is about 100°.

The purge head 52 comprises a bulbous body 86 having an upper hexagonal portion 86a extending downwardly from the surface 84 and merging into a hemispherical portion 86b. The bulbous body 86 is integral with a hollow cylindrical stub 87 which is screwed into the recess 54 in the distributor. The passages 58 are symmetrically arranged with a vertical passage 58 coaxial with the air tube 56, a plurality of upper radial horizontal passages 58 and a plurality of intermediate passages 58 which are downwardly inclined at an angle of 45°. All the passages 58 communicate with the interior of the cylindrical stub 87 which itself communicates with the air tube 56.

It is believed the baffle portion 80 acts to minimise recirculation of sulphur dioxide-containing gas within the cup 18 and thereby minimises deposition of solid reaction product within the cup 18; and the air purge arrangement acts to minimise any approach of the sulphur dioxide-containing gas towards the lower surface 84 of the baffle portion 80 thereby minimising solids deposition on the baffle portion 80.

It has been found that the rotary cup atomiser operates satisfactorily with flow rates of slurry e.g. from 2 to 8 Imperial gallons per minute and with slurry concentrations up to e.g. 40% lime solids by weight.

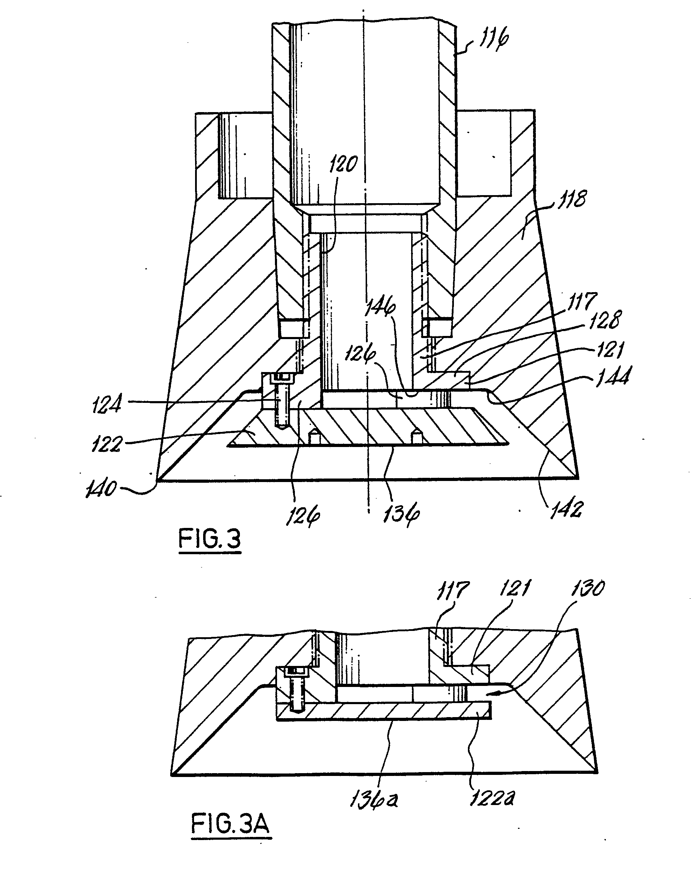

In a modification the included conical angle of the baffle portion 80 is reduced to about 70° so that it extends up to the bottom of the exits of the ducts 19 (as is also the case in Figures 3 and 6).

This minimises the risk of solids build-up in the potentially stagnant region at the angle between the baffle portion 80 and the cylindrical portion 80a.

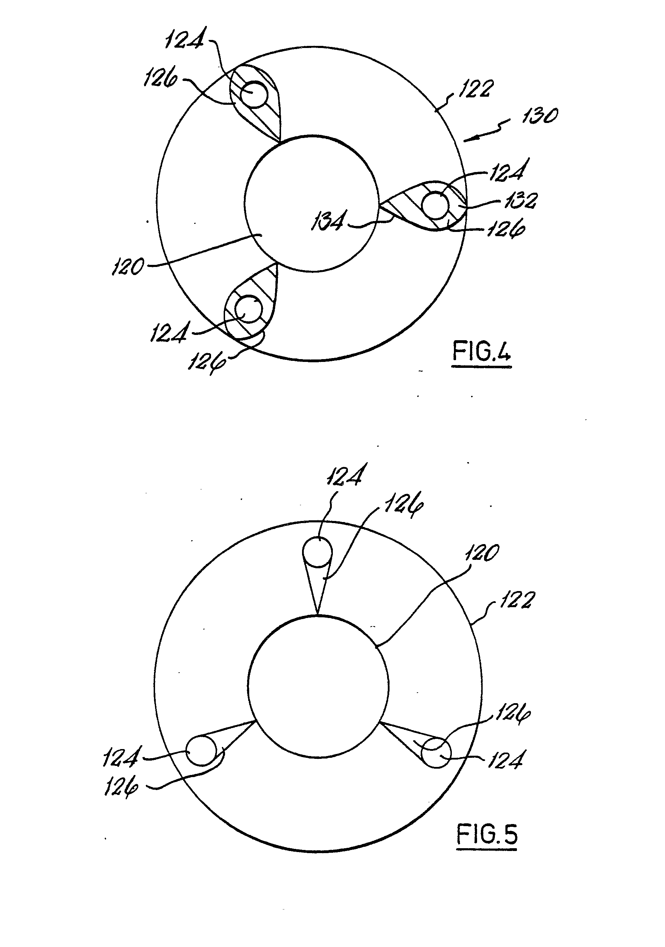

The first modified rotary cup atomiser (Figures 3 and 4) corresponds in construction, arrangement and operation to the atomiser 9 shown in Figure 2, except in respect of the assembly of rotary cup and distributor member and in that there is generally no air purge arrangement. The cup 118 and distributor member 117 of the first modified atomiser are described insofar as they differ from the cup 18 and distributor member 17a respectively.

The first modified atomiser comprises a hollow shaft 116 corresponding to the shaft 16. The cup 118 is secured to the shaft 116 and the distributor member 117 is screwed into the shaft 116.

The distributor member 117 comprises a vertical duct 120 terminating in a flange 121 received in a corresponding recess 128 in the cup 118. A lower frusto-conical baffle portion 122 is secured to the flange 121 by three symmetrically spaced (see Figure 4) screws 124. The flange 121 comprises three integral narrow pillars 126 through which the screws 124 extend. It will be noted that a circumferentially wide slurry distributor slot 130 (Figure 4) is defined between each pair of adjacent pillars 126 and the pillars 126 provide a minimum obstruction to flow of slurry, and also minimise the risk of blockage of the flow of slurry due to solids build-up.

In the modification of Figure 3A, the baffle portion 122 is replaced by a simple thin flat plate 122a defining the lower boundaries of the slots and of the same diameter as the flange 121.

Each pillar 126 has a streamlined profile which is symmetrical about a radius of the cup 118. Each streamline profile comprises a blunt curved trailing portion 132 which (in plan view—Figure 4) is tangential to the upper circumference of the baffle portion 122 and a pointed leading portion 134 which (in plan view) lies on the inner circumference of the cylindrical portion 120 of the distributor member 117. A lower horizontal surface 136 of the baffle portion 122 is set back upwardly from the rim 140 of the cup 118 axially inwardly of the cup 118, and surprisingly it has been found that this setting back generally obviates the need for an air purge arrangement.

The cup 118 comprises a lower frusto-conical surface 142, which merges smoothly into an annular chamfer 144 itself merging smoothly into a horizontal surface 146 of the flange 121, which surface provides the upper boundary of the slots 130; thus the chamfer 140 facilitates a smooth transition of slurry flow from the slots 130 into the frusto-conical surface 142.

The included frusto-conical angle of the surface 142 of the cup 118 is again about 90° and the diameter (D) (Figure 7) of the cup at its rim 140 is about 75 mm.; the overall height of the cup is about 70 mm.; the axial height (h) from the rim 140 to the surface 146 (i.e. the axial height of the surface 142) is about 16 mm.; and the ratio D:h is

therefore about 4.7:1. The diameter of the surface 136 of the baffle portion 122 is about 77% of the horizontal diameter of the surface 142 at the plane of the surface 136; in the modification of Figure 3A, the diameter of the plate 122a is about 65% of the horizontal diameter of the interior surface of the cup in the plane of the bottom surface 136a of the plate 122a. The included frusto-conical angle of the baffle portion 122 is the same as that of the surface 142 and thus the frusto-conical surface of the baffle portion 122 is parallel (Figure 3) to the surface 142.

Figure 5 illustrates a modification of the atomiser of Figures 3 and 4, in which the obstruction of liquid flow caused by the pillars 126 is reduced even further by using the profile of the screws 124 (Figure 5) as the trailing portion of the streamlined profile and making the leading profile of the pillars 126 narrower; it will be appreciated that the trailing portion of the streamlined profile will now lie radially inwards of the upper circumference of the baffle portion 122.

The second modified rotary cup atomiser (Figure 6) corresponds in construction, arrangement and operation to the first modified rotary cup atomiser, again except in respect of the assembly of rotary cup and distributor member. The cup 218 and distributor member 217 of the second modified atomiser are described insofar as they differ from the cup 118 and distributor member 117, respectively.

The distributor member 217 is of an integral construction and comprises twelve downwardly inclined ducts 219 somewhat resembling the ducts 19 of Figure 2. A lower portion 222 of the distributor member 217 again forms a frusto-conical baffle portion which is connected to an upper duct 220 by an enlarged intermediate portion 224 in which the ducts 219 are provided.

The cup 218 comprises a lower frusto-conical surface 242 which merges smoothly into an annular chamfer 244 which itself provides a smooth transition to the top of the ducts 219.

The included frusto-conical angle of the surface 242 is again about 90°, the overall height of the cup is about 85 mm., the diameter (D) of the cup at its outer rim 250 is about 115 mm., the axial height (h) of the surface 242 is about 30 mm., and the ratio D:h therefore is about 3.8:1. The axial distance (d) (Figure 7) from the rim 250 to the surface 252 is about 16 mm and the ratio D:d therefore about 7.2:1. The diameter of the lower horizontal surface 252 of the baffle portion 217 is about 80% of the diameter of the horizontal diameter of the surface 242 at the plane of the surface 252. The included frusto-conical angle of the baffle portion 222 is about 120°.

It appears that the rotary cup atomiser of Figure 6 operates satisfactorily with flow rates of slurry up to about 15 Imperial gallons per minute or more.

Where a plurality of ducts is used for liquid distribution such as at 19 in Figure 2 or at 219 in Figure 6, the number of ducts is preferably from 5 to 15 or more; and more preferably from 6 to 12.

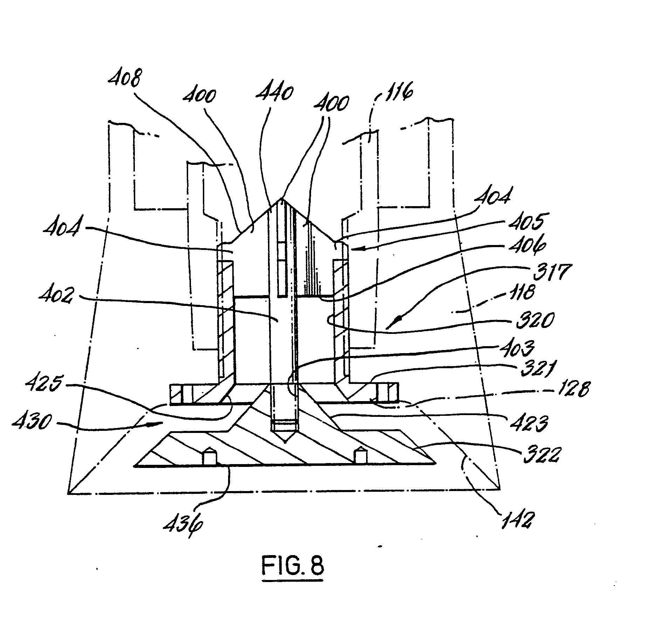

In Figure 8 is shown a modified distributor arrangement which may be used for example in the atomiser of Figure 3, which is otherwise unchanged. The distributor member 317 and the baffle portion 322 of Figure 8 are described insofar as they differ from the distributor member 17 and the baffle portion 122.

The distributor member 317 is screwed into the shaft 116 in a similar fashion to the distributor member 17, and the member 317 comprises a vertical duct 320 terminating in a flange 321 received in the recess 128 in the cup 118.

The baffle portion 322 is secured in position by an assembly of four vertical vanes 400 (three of which are shown in Figure 8) and an axial pillar 402; a lower end portion of the axial pillar 402 is screwed into a corresponding recess 403 in a frusto-conical upward extension 423 of the baffle portion 322. The extension 423 faces a parallel widened frusto-conical surface 425 at the lower end of the duct 320. The vanes 400 are secured to an upper portion of the pillar 402 and extend radially therefrom at intervals of 90° around the axis of the pillar 402. In a modification the four vanes are replaced by three at 120° intervals or 2 at a 180° interval. An ear 404 on each vane 400 is secured in a corresponding slot 405 in the duct 320. The pillar 402 comprises a conical upstream end boss 440 which is leading with respect to liquid flow and facilitates streamlined flow and each vane 400 comprises a horizontal lower edge 406 and an upper edge 408 which slopes downwardly from the apex of the boss 440 to the ear 404.

It will be noted that the arrangement of Figure 8 provides a wide annular unobstructed distributor slot 430 which further minimises the risk of blockage of the flow of slurry due to solids build-up. It will be realised that the vertical spacing of the baffle portion 322 from the flange 321 and hence the width of the slot 430 is determined by the length of the thread on the lower end portion of the pillar 402, where it is screwed into the baffle portion 322. Also provision can be made for adjusting the width of the slot 430 by screwing the baffle portion 322 upwardly or downwardly on the pillar 402.

Again the baffle portion 322 may be omitted and replaced by a simple thin flat plate (not shown) similar to the plate 122a of Figure 3A.

The diameter of the lower surface 436 of the baffle portion 322 is about 75% of the horizontal diameter of the surface 142 at the plane of the surface 436; in the modification where the baffle portion 322 is replaced by a simple thin flat plate, the corresponding figure is about 64%. The included frusto-conical angle of the baffle portion 322 is again the same as that of the surface 142.

Attention is directed also to our GB—A—2,149,685A (equivalent EP—A—0 142 377).

**Claims**

1. A spray device adapted for use in spraying a liquid which in the operation of the device is directed from an extended surface (74, 142, 242) thereof, the spray device comprising (a) an axially symmetrical cup (18, 118, 218) rotatable about its axis and the interior of which provides the extended surface, and which converges generally frusto-conically from the rim; (b) means (17a, 117, 217, 317) for supplying the liquid to the interior of the cup so that a film of liquid is continuously provided on the extended surface (74, 142, 242) preparatory to directing the liquid from the surface beyond an outer rim (22a, 140, 250) of the cup; (c) means (21a) for supplying a gas stream to impact the liquid immediately beyond the outer rim thereby to produce a spray of liquid droplets; and (d) an axially symmetrical baffle (80, 122, 122a, 252, 322) mounted within the cup coaxially therewith, an annular gap being provided between the baffle and the extended surface, characterised in that the ratio of the diameter (D) of the cup at its outer rim to the axial height (h) of the frusto-conical surface is (D:h) from 3:1 to 6:1.

2. A spray device according to claim 1, wherein the included frusto-conical angle is from 80° to 120°.

3. A spray device according to claim 1 or claim 2, wherein the baffle (122, 122a, 252, 322) is set back axially inwardly of the outer rim of the cup.

4. A spray device according to claim 3, wherein the ratio between the diameter (D) of the cup at its outer rim and the axial distance (d) from the outer rim to the baffle (D:d) does not exceed 8:1 e.g. from 7:1 to 8:1.

5. A spray device according to claim 1 or claim 2, comprising means (52) for directing a purge gas in the region of the baffle (80) to minimize the risk of solids build up on the baffle (80).

6. A spray device according to any one of the preceding claims, wherein the baffle converges generally frusto-conically in the axial direction away from the outer rim of the cup, with an included conical angle for example not exceeding 120°.

7. A spray device according to claim 6, wherein the major diameter of the baffle is at least 70% (e.g. at least 75%) of the diameter of the interior surface of the cup at the plane of said major diameter.

8. A spray device according to any one of the preceding claims, wherein the cup is of a massive integral construction.

9. A spray device according to any one of the preceding claims, wherein the cup comprises (in external profile) a frusto-conical downstream end portion (78) terminating in the outer rim and converging therefrom; and a circular cylindrical upstream end portion (76).

10. A spray device according to any one of the preceding claims, wherein the liquid supply means comprises a distributor assembly (317) coaxial with the cup and comprising a conical upstream end portion (440) which is leading with respect to the liquid flow.

11. A spray device according to any one of the preceding claims, wherein the cup is capable of rotating at a speed of up to 6,000 revolutions per minute.

12. A gas/liquid contacting apparatus comprising a spray drier chamber (6) having a gas inlet (10) and a gas outlet (10a) and a spray device (9) according to any one of the preceding claims arranged to spray the liquid into the chamber for contacting with the gas.

13. Apparatus adapted for use in desulphurising a hot sulphur dioxide-containing gas comprising (a) a spray drier vessel (6) which comprises an inlet (10) communicating with a source of the hot sulphur dioxide containing gas and an outlet (10a) for the gas; (b) a spray device (9) according to any one of claims 1 to 11 arranged to spray the liquid into the vessel, the liquid supply means of said device communicating with a source of an aqueous solution or slurry which absorbs sulphur dioxide with chemical reaction; and (c) means (5) (e.g. an electro-precipitator or a bag filter) communicating with the vessel outlet for removing suspended particles from the gas which has been contacted with liquid in the vessel.

14. A method of treating a polluted gas with a liquid to cool and/or clean the gas, wherein the liquid is sprayed into the polluted gas using a spray device according to any one of claims 1 to 11.

15. A method according to claim 14, when used in cleaning a hot pollutant (e.g. sulphur dioxide).

**Patentansprüche**

1. Sprühvorrichtung zur Verwendung beim Zerstäuben einer Flüssigkeit, die im Betrieb der Vorrichtung von einer erweiterten Oberfläche (74, 142, 242) der Vorrichtung abgeleitet wird, bestehend aus a) einer axialsymmetrischen Schale (18, 118, 218), die um ihre Achse drehbar ist, deren Inneres die erweiterte Oberfläche darbietet und die im allgemeinen kegelstumpfförmig vom Rand aus konvergiert, b) einer Einrichtung (17a, 117, 217, 317) zum Zuführen der Flüssigkeit zum Inneren der Schale, derart, daß ein Flüssigkeitsfilm ständig auf der erweiterten Oberfläche (74, 142, 242) in Vorbereitung des Ableitens der Flüssigkeit von der Oberfläche jenseits eines Außenrandes (22a, 140, 250) der Schale vorhanden ist, c) einer Einrichtung (21a) zum Zuführen eines Gasstromes zur Beaufschlagung der Flüssigkeit unmittelbar jenseits des Außenrandes, um dadurch einen Flüssigkeitsnebel zu erzeugen, und d) einer axial-symmetrischen Leitvorrichtung (80, 122, 122a, 252, 322), die innerhalb der Schale koaxial mit dieser angebracht ist und wobei ein Ringspalt zwischen der Leitvorrichtung und der erweiterten Oberfläche vorgesehen ist, dadurch gekennzeichnet, daß das Verhältnis des Durchmessers (D) der Schale an ihrem Außenrand zur axialen Höhe (h) der kegelstumpfförmigen Oberfläche (D:h) von 3:1 bis 6:1 beträgt.

2. Sprühvorrichtung nach Anspruch 1, dadurch gekennzeichnet, daß der eingeschlossene Kegelstumpfwinkel 80° bis 120° beträgt.

3. Sprühvorrichtung nach Anspruch 1 oder 2, dadurch gekennzeichnet, daß die Leitvorrichtung (122, 122a, 252, 322) vom Außenrand der Schale axial nach innen zurückversetzt ist.

4. Sprühvorrichtung nach Anspruch 3, dadurch gekennzeichnet, daß das Verhältnis zwischen dem Durchmesser (D) der Schale an ihrem Außenrand und dem axialen Abstand (d) vom Außenrand zur Leitvorrichtung (D:d) 8:1 nicht übersteigt und z.B. 7:1 bis 8:1 beträgt.

5. Sprühvorrichtung nach Anspruch 1 oder 2, gekennzeichnet durch eine Einrichtung (52) für die Einleitung eines Reinigungsgases in den Bereich der Leitvorrichtung (80) zur Herabsetzung der Gefahr eines Feststoffansatzes an der Leitvorrichtung (80).

6. Sprühvorrichtung nach einem der vorhergehenden Ansprüche, dadurch gekennzeichnet, daß die Leitvorrichtung im allgemeinen kegelstumpfförmig in axialer Richtung vom Außenrand der Schale fort mit einem beispielsweise 120° nicht übersteigenden eingeschlossenen Kegelwinkel konvergiert.

7. Sprühvorrichtung nach Anspruch 6, dadurch gekennzeichnet, daß der große Durchmesser der Leitvorrichtung zumindest 70% (z.B. zumindest 75%) des Durchmessers der Innenfläche der Schale in der Ebene des großen Durchmessers der Leitvorrichtung beträgt.

8. Sprühvorrichtung nach einem der vorhergehenden Ansprüche, dadurch gekennzeichnet, daß die Schale von einer massiven Konstruktionseinheit gebildet ist.

9. Sprühvorrichtung nach einem der vorhergehenden Ansprüche, dadurch gekennzeichnet, daß die Schale (im Außenprofil) einen kegelstumpfförmigen stromabwärts gelegenen Endbereich (78), der im Außenbrand endet und von diesem konvergiert, und einen kreiszylindrischen stromaufwärts gelegenen Endbereich (76) aufweist.

10. Sprühvorrichtung nach einem der vorhergehenden Ansprüche, dadurch gekennzeichnet, daß die Flüssigkeitszuführeinrichtung eine mit der Schale koaxiale Verteilereinrichtung (317) umfaßt, die einen konischen stromaufwärts gelegenen Endberich (440) aufweist, der in bezug auf den Flüssigkeitsstrom vorn liegt.

11. Sprühvorrichtung nach einem der vorhergehenden Ansprüche, dadurch gekennzeichnet, daß die Schale mit einer Geschwindigkeit von bis zu 6000 Umdrehungen pro Minute drehbar ist.

12. Gas/Flüssigkeitskontaktvorrichtung mit einer Sprühtrocknerkammer (6) mit einem Gaseinlaß (10) und einem Gasauslaß (10a) sowie einer Sprühvorrichtung (9) nach einem der vorhergehenden Ansprüche in einer Anordnung zum Einsprühen der Flüssigkeit in die Kammer zur Kontaktierung mit dem Gas.

13. Vorrichtung zum Entschwefeln eines heißen schwefeldioxidhaltigen Gases, bestehend aus a) einem Sprühtrocknerbehälter (6) mit einem mit einer Quelle des heißen schwefeldioxidhaltigen Gases in Verbindung stehenden Einlaß (10) und einem Auslaß (10a) für das Gas, b) einer Sprühvorrichtung (9) nach einem der Ansprüche 1 bis 11 zum Einsprühen der Flüssigkeit in den Behälter, wobei die Flüssigkeitszuführeinrichtung der Sprühvorrichtung mit einer Quelle einer wäßrigen Lösung oder Schlämme in Verbindung steht, die Schwefeldioxid mit chemischer Reaktion absorbiert, und c) einer Einrichtung (5) (z.B. einem Elektroabscheider oder einem Filtersack) in Verbindung mit dem Behälterauslaß zur Entfernung von Schwebepartikeln aus dem Gas, das mit der Flüssigkeit in dem Behälter in Berührung gebracht worden ist.

14. Verfahren zum Behandeln eines verunreinigten Gases mit einer Flüssigkeit zur Kühlung und/oder Reinigung des Gases, bei dem die Flüssigkeit in das verunreinigte Gas unter Verwendung einer Sprühvorrichtung nach einem der Ansprüche 1 bis 11 eingesprüht wird.

15. Verfahren nach Anspruch 14 in seiner Verwendung zum Reinigen eines heißen Verschmutzungsstoffes (z.B. Schwefeldioxid).

**Revendications**

1. Dispositif de pulvérisation adapté à être utilisé pour pulvériser un liquide qui, en fonctionnement du dispositif, est dirigé depuis une surface étendue (74, 142, 242) de celui-ci, le dispositif de pulvérisation comprenant (a) une cuvette axialement symétrique (18, 118, 218) apte à tourner autour de son axe et dont l'intérieur constitue la surface étendue, et qui converge de manière sensiblement tronconique depuis le bord; (b) des moyens (17a, 117, 217, 317) destinés à introduire le liquide dans l'intérieur de la cuvette pour qu'il se forme sur la surface étendue (74, 142, 242) un film de liquide de manière continue avant de diriger le liquide depuis la surface au-delà d'un bord extérieur (22a, 140, 250) de la cuvette; (c) des moyens (21a) destinés à fournir un courant de gaz pour se heurter contre le liquide immédiatement au-delà du bord extérieur afin dse produire un embrun de gouttelettes de liquide; et (d) un déflecteur axialement symétrique (80, 122, 122a, 252, 322) monté à l'intérieur de la cuvette coaxialement par rapport à celle-ci, un intervalle annulaire étant réservé entre le déflecteur et la surface étendue, caractérisé en ce que le rapport entre le diamètre (D) de la cuvette au niveau de son bord extérieur et la hauteur axiale (h) de la surface tronconique (D:h) se situe entre 3:1 et 6:1.

2. Dispositif de pulvérisation selon la revendication 1, caractérisé en ce que l'angle tronconique inclus est compris entre 80° et 120°.

3. Dispositif de pulvérisation selon la revendication 1 ou la revendication 2, dans lequel le déflecteur (122, 122a, 252, 322) est disposé en retrait axialement vers l'intérieur par rapport au bord extérieur de la cuvette.

4. Dispositif de pulvérisation selon la revendication 3, dans lequel le rapport entre le diamètre (D) de la cuvette au niveau de son bord extérieur et la distance axiale (d) entre le bord extérieur et le déflecteur (D:d) ne dépasse pas 8:1, par exemple entre 7:1 et 8:1.

5. Dispositif de pulvérisation selon la revendication 1 ou la revendication 2, comprenant des moyens (52) destinés à diriger un gaz de purge au voisinage du déflecteur (80) pour minimiser le risque d'une accumulation de solides sur le déflecteur (80).

6. Dispositif de pulvérisation selon l'une quelconque des revendications précédentes, dans lequel le déflecteur converge de manière sensiblement tronconique dans la direction axiale à partir du bord extérieur de la cuvette, selon un angle conique inclus ne dépassant pas par exemple 120°.

7. Dispositif de pulvérisation selon la revendication 6, dans lequel le diamètre majeur du déflecteur est au moins 70% (par exemple au moins 75%) du diamètre de la surface intérieure de la cuvette au niveau du plan dudit diamètre majeur.

8. Dispositif de pulvérisation selon l'une quelconque des revendications précédentes dans lequel la cuvette est une construction massive réalisée d'une seule pièce.

9. Dispositif de pulvérisation selon l'une quelconque des revendications précédentes, dans lequel la cuvette comprend (en profil externe) une portion d'extrémité aval tronconique (78) se terminant au niveau du bord extérieur et convergent à partir de celui-ci; et une portion d'extrémité amont cylindrique circulaire (76).

10. Dispositif de pulvérisation selon l'une quelconque des revendications précédentes, dans lequel les moyens d'alimentation en liquide comprennet un ensemble distributeur (317) coaxial par rapport à la cuvette et comprenant une portion d'extrémité amont cônique (440) qui est en avant par rapport à l'écoulement du liquide.

11. Dispositif de pulvérisation selon l'une quelconque des revendications précédentes, dans lequel la cuvette est apte à tourner à une vitesse jusqu'à 6 000 tours/mn.

12. Appareil de contact gaz/liquide comprenant une chambre de séchage par pulvérisation (6) dotée d'une entrée de gaz (10) et d'une sortie de gaz (10a) et un dispositif de pulvérisation (9) selon l'une quelconque des revendications précédentes adaptées pour pulvériser le liquide dans la chambre au contact du gaz.

13. Appareil adapté à la désulfurisation d'un gaz chaud contenant de l'anhydride sulfureux comprenant (a) une cuve de séchage par pulvérisation (6) qui comporte une entrée (10) en communication avec une source du gaz chaud contenant de l'anhydride sulfureux et une sortie de gaz (10a); (b) un dispositif de pulvérisation (9) selon l'une quelconque des revendications 1 à 11 adaptées pour pulvériser le liquide dans la cuve, les moyens d'alimentation en liquide du dispositif communiquant avec une source d'une solution aqueuse ou boue qui absorbe l'anhydride sulfureux par réaction chimique; et (c) des moyens (5) (par exemple un électroprécipitateur ou manche filtrante) communiquant avec la sortie de la cuve pour éliminer les particules en suspension du gaz qui a été mis en contact avec le liquide dans la cuve.

14. Procédé de traitement d'un gaz pollué à l'aide d'un liquide pour refroidir et/ou pour nettoyer le gaz, dans lequel le liquide est pulvérisé dans le gaz pollué à l'aide d'un dispositif de pulvérisation selon l'une quelconque des revendications 1 à 11.

15. Procédé selon la revendication 14, utilisé pour éliminer un polluant chaud (par exemple l'anhydride sulfureux).

FIG.1

**0 112 101**

FIG.2

2

FIG.3

FIG.3A

FIG.4

FIG.5

FIG.6

FIG.7

FIG. 8